# EUROPEAN PATENT SPECIFICATION

(11) **EP 2 836 744 B1**
(45) Date of publication and mention of the grant of the patent: **31.05.2023**
(21) Application number: 13785962.5
(22) Date of filing: 10.04.2013
(51) Int. Cl.: F16H 57/08

(54) **GEARBOX AND SUPPORT APPARATUS FOR GEARBOX CARRIER**
GETRIEBE UND STÜTZVORRICHTUNG FÜR GETRIEBETRÄGER
BOÎTE DE VITESSES ET APPAREIL DE SUPPORT POUR PORTEUR DE BOÎTE DE VITESSES

(30) Priority: 11.04.2012 US 201261622592 P; 29.06.2012 US 201261666532 P; 15.03.2013 US 201313835687
(43) Date of publication of application: 18.02.2015
(73) Proprietor: General Electric Company, Schenectady, NY 12345 (US)
(72) Inventor: VAN DER MERWE, Gert, Cincinnati, OH 45215 (US); HALLMAN, Darren, Niskayuna, NY 12309 (US); BUYUKISIK, Osman, West Chester, OH 45069 (US); BRADLEY, Donald, Cincinnati, OH 45215 (US); ANTELO, Randy, Cincinnati, OH 45215 (US)
(74) Representative: Openshaw & Co.
(86) International application number: PCT/US2013/035989
(87) International publication number: WO 2014/018131

(56) References cited:
- EP-A1- 1 890 054
- DE-A1-102005 049 185
- DE-A1-102009 020 988
- DE-U1- 20 108 305
- JP-U- H0 462 949
- US-A1- 2004 259 679
- US-A1- 2006 252 596
- US-A1- 2010 150 702

## Description

### BACKGROUND OF THE INVENTION

This invention relates generally to epicyclic gearboxes, and more specifically to carrier support apparatus and bearings of an epicyclic gearbox.

Epicyclic gearboxes are often used in aircraft engines to transmit power, for example to drive a propeller or fan from a power turbine. Gearboxes for aircraft applications must be lightweight, capable of transmitting high torque loads, and highly reliable. The system level reliability of the gearbox is the biggest hurdle from a technical perspective.

In operation, the planets in the gearbox transfer large loads into the carrier, which cause deflections and misalignment in the bearings and gears of the gearbox. In order to have a commercially long life, these deflections and misalignments must be minimized.

It is known to support a gearbox carrier centrally using spherical bearings to transfer load at an axial midpoint in carrier. This isolates the torque fingers that couple the gearbox carrier to adjacent structures from bending moments. However, the working spherical joints with moving parts are subject to wearing and looseness, and their presence increases the complexity of the gearbox.

Furthermore, the use of traditional steel bearings (e.g. M50 steel alloy or similar) will yield a low system level life due to bearing count in the gearbox.

Ceramic rolling elements are known to provide a longer life than steel rollers, however they are used in the form of ball or spherical roller bearings which are not axially compliant and therefore not compatible with some helical gear configurations.

Accordingly, there is a need for a gearbox with a durable, compliant carrier mounting configuration, and a durable, axially-compliant bearing configuration. US 2004/0259679 discloses a speed reduction gear in which a cage is connected to a cage carrier having axial arms by radial pins. This document discloses the following features of claim 1 of the present invention: an apparatus for supporting a gearbox, comprising: a gearbox carrier having a central axis, the carrier configured to mount one or more rotating gears therein, the carrier including spaced-apart forward and aft walls, and a center plate disposed between the forward and aft walls in an axial direction with respect to the central axis; an annular support ring disposed axially adjacent to the carrier; and a plurality of axially-extending torque fingers interconnecting the support ring and the center plate.

### BRIEF SUMMARY OF THE INVENTION

According to the invention, an apparatus for supporting a gearbox according to claim 1 is provided.

### BRIEF DESCRIPTION OF THE DRAWINGS

The invention may be best understood by reference to the following description taken in conjunction with the accompanying drawing figures in which:
FIG. 1 is a cross-sectional view of an epicyclic gearbox constructed in accordance with an aspect of the present invention;
FIG. 2 is a side view of a bearing roller of the gearbox of FIG. 1.
FIG. 3 is a partially-sectioned view of a portion of a carrier of the gearbox of FIG. 1;
FIG. 4 is a view taken along lines 4-4 of FIG. 3; and
FIG. 5 is a partially-sectioned perspective view of a portion of the gearbox of FIG. 1.

### DETAILED DESCRIPTION OF THE INVENTION

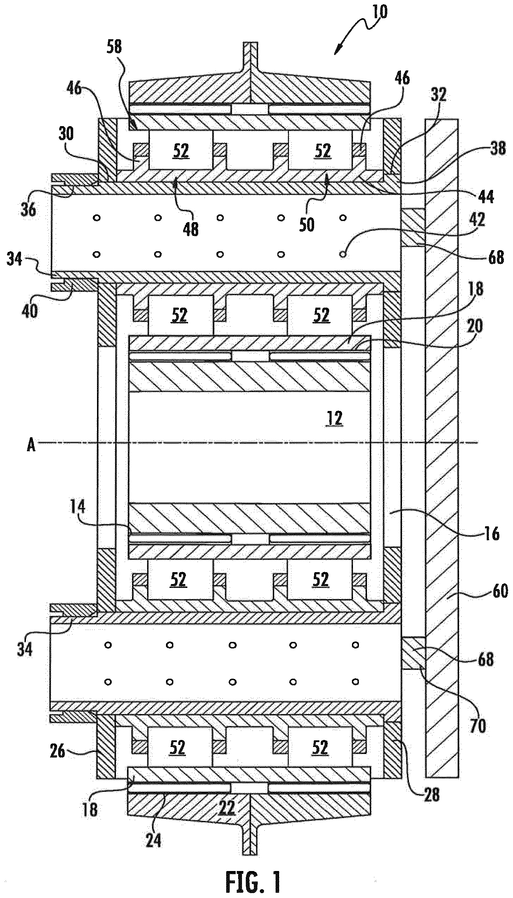

Referring to the drawings wherein identical reference numerals denote the same elements throughout the various views, FIG. 1 depicts a gearbox 10 constructed according to an aspect of the present invention. The gearbox 10 is an epicyclic type and has a central axis "A". The gearbox 10 includes a centrally-located sun gear 12. The sun gear 12 has a double-helical or "herringbone" pattern of gear teeth 14. A carrier 16 surrounds the sun gear 12 and carries an annular array of planet gears 18. In the illustrated example there are four planet gears 18 but varying numbers of planet gears 18 may be used. Each planet gear 18 has a herringbone pattern of gear teeth 20. A ring gear 22 surrounds the planet gears 18 and also has a herringbone pattern of gear teeth 24. Collectively the sun gear 12, the planet gears 18, and the ring gear 22 constitute a gear train. Each of the planet gears 18 meshes with both the sun gear 12 and the ring gear 22. The sun gear 12, planet gears 18, and ring gear 22 may be made from steel alloys. In operation, the sun gear 12 is turned by an input (for example, a rotor shaft, not shown) while the ring gear 22 is coupled to a mechanical load (such as a fan, not shown). The gearbox 10 is effective to reduce the rotational speed of the sun 12 to a rotational speed appropriate for the load coupled to the ring gear 22, in a known manner.

Because each of the gear meshes (sun-to-planet and planet-to-ring) has a double-helical or "herringbone" gear tooth profile, there is no relative movement possible parallel to the axis A between the sun gear 12 and the planet gears 18, or the planet gears 18 and the ring gear 22, or in other words there is no axial compliance between these elements.

The planet gears 18 are therefore selected and mounted in a manner to provide axial compliance between the carrier 16 and the planet gears 18.

The mounting of one planet gear 18 will be described with the understanding that all of the planet gears 18 are mounted identically. The carrier 16 includes a forward wall 26 and an aft wall 28, with coaxial bores 30 and 32, respectively. A pin 34 is received in the bores 30 and 32. The pin 34 is hollow, generally cylindrical, and has forward and aft ends. The forward end includes a threaded, reduced-diameter surface 36 while the aft end includes an annular, radially-outwardly-extending flange 38. A retainer 40 (in this example a threaded locknut) engages the reduced-diameter forward surface 36 to secure the pin 34 in position against rearward axial movement. The pin 34 has a plurality of feed holes 42 formed therein. In operation, oil is fed to the interior of the hollow pin 34 and flows through the feed holes to an inner race 44, providing both cooling and lubrication. Roller bearings 52 are disposed between the inner race 44 and the interior surface of the planet gear 18.

In the illustrated example, the inner race 44 is a single integral component incorporating pairs of raised guides 46 which define annular forward and aft raceways and. The flange 38 of the pin 34 bears against the inner race 44 which in turn bears against the interior face of the front wall 26 of the carrier 16. This secures the pin 24 against forward axial movement. The use of a single inner race provides for good concentricity between roller sets, but two separate inner races could be used as well. The inner race 44 is sized so that it cannot move axially relative to the carrier 16.

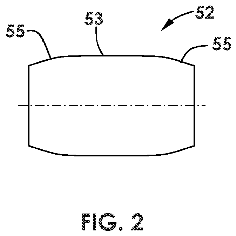

The channels 48 and 50 receive rollers 52, in two tandem rings. The rollers 52 comprise a ceramic material of a known composition, for example silicon nitride (Si₃Ni₄). The rollers 52 are configured as cylindrical rollers. As seen in FIG. 2, in profile view the rollers 52 have a barrel-like shape with a central crown 53 of maximum diameter, with end portions 55 that taper off in a convex curve to a smaller diameter (the shaping is exaggerated for illustration in FIG. 2). Careful selection of the shape and dimensions of the crown 53 and end portions 55 in accordance with known practices will provide the longest life for the rollers 52.

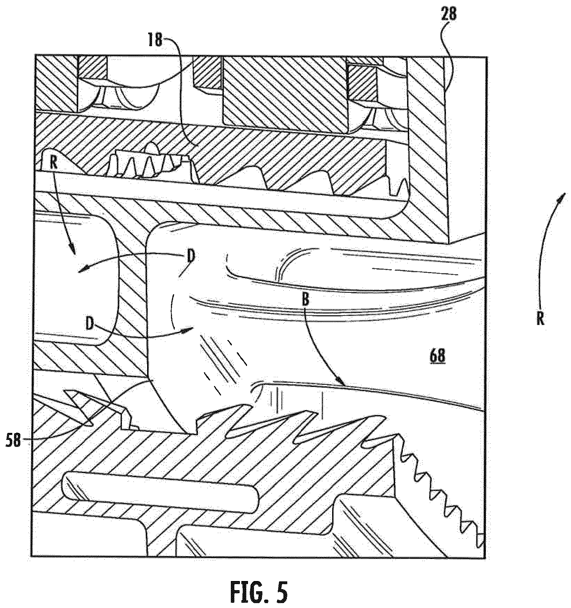

Referring back to FIG. 5, the cylindrical interior surface of the planet gear 18 defines the outer race 57 for the rollers 52. In operation, axial sliding of the rollers 52 can occur relative to the outer race 57, which in turn permits limited axial movement of the carrier 16 relative to the planet gears 18. This allows for tolerance and thermal stackup in the carrier 16.

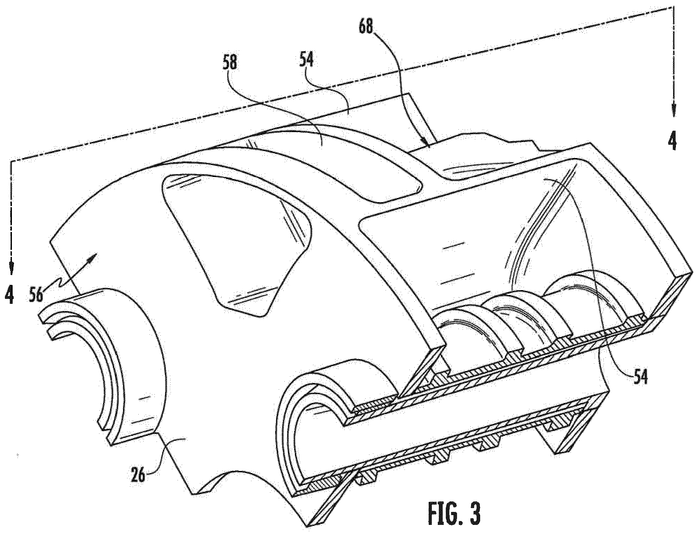

The carrier 16 is also supported in a manner to prevent misalignment in the gears and bearings of the gearbox 10 during operation, as illustrated in FIGS. 3-5.

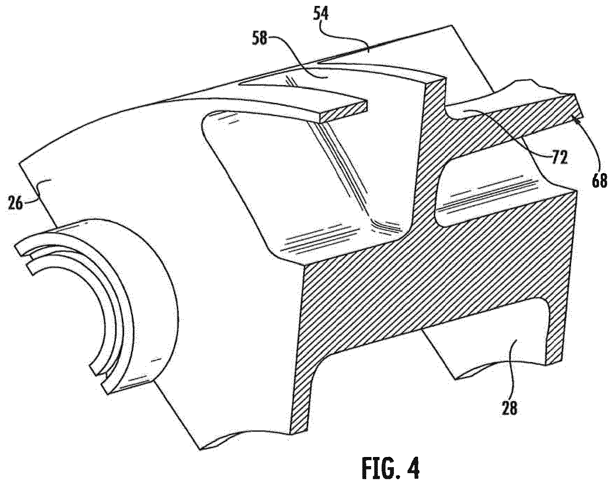

The forward and aft walls 26 and 28 of the carrier 16 are interconnected by axially-extending sidewalls 54 (see FIG. 3). Pairs of the sidewalls 54 are disposed on opposite lateral sides of each of the planet gears 18. Collectively, the forward wall 26, aft wall 28, and the sidewalls 54 define a plurality of lobes or arms 56 of the carrier 16, with spaces therebetween. Each planet gear 18 is enclosed within one lobe 56. The carrier 16 also includes a center plate structure as an integral part of its structure. As seen in FIGS. 3 and 4, the center plate structure is segmented into a plurality of individual center plates 58. Each center plate 58 takes the form of an arc-shaped portion of a circular disk, and lies substantially in a radial plane (i.e. is parallel to the forward and aft walls 26 and 28). Each center plate 58 spans the space between a pair of the lobes 56, connecting to adjacent ones of the sidewalls 54. In the illustrated example, the center plates 58 are located approximately halfway between the forward and aft walls 26 and 28. The axial location of the center plates 58 may be adjusted to suit a particular application. In particular, through careful placement of the axial location of the center plates 58, misalignment in the carrier 16 can be controlled.

An annular support ring 60 (see FIG. 1) is disposed axially adj acent to the aft wall 28. The support ring 60 is provided with means such as bolt holes (not shown) to secure it to a torque ring structure (not shown). A plurality of torque fingers 68 extend axially between the support ring 60 and the center plate structure. One torque finger 68 is provided for each of the center plates 58. The torque finger 68 is functionally integral with the center plate 58 and the support ring 60. It may be constructed as part of an integral (i.e. monolithic) component with the center plate 58 and the support ring 60, or it may be a separate component which is assembled to center plate 58 and the support ring 60. The center plate structure as well as the surrounding structures may be constructed from a suitable metallic alloy such as an iron-, nickel-, or titanium-based alloy. The torque finger 68 has a first cross-sectional area at its aft end 70 (FIG. 1) and tapers to a smaller cross-sectional area at its forward end 72 (FIG. 4). Its cross-sectional width in the tangential direction is generally greater than its cross-sectional thickness in a radial direction. The forward and aft ends 72 and 70 taper smoothly into the center plate 58 and the support ring 60 through concave-curved fillets.

In operation, the planet gears 18 transfer large tangential forces into the carrier 16, causing the carrier 16 to tend to rotate relative to the support ring 60 (see the relative direction marked by the arrows "R" in FIG. 5). This results in elastic bending of the torque fingers 68 in the tangential direction (shown by arrow "B"). The center plates 58 will deflect (arrows "D") to accommodate the bending of the of the torque fingers 68. Their effect is to absorb the torque as strain energy and isolate the movement of the torque fingers 68 from the carrier 16. This avoids distortion of the carrier 16 and consequent misalignment of the bearings and changing of gear operating clearances. The center plates 58 are sized and shaped such that the stresses in them will remain in the elastic range for the expected operating loads.

The gearbox support apparatus described herein has several advantages over the prior art. It eliminates several separate parts as compared to a prior art gearbox. No lubrication of joints is required. The low misalignment provided by this apparatus is enabling technology for use of a gearbox embedded in a gas turbine engine. In particular, low misalignment will result in gear and bearing life that meets system level requirements.

Furthermore, the use of ceramic cylindrical rolling elements allows the planet gears 18 to have a degree of freedom in the axial direction, simplifying the design. The ceramic rolling elements are anticipated to provide at least a doubling in life compared to steel rollers, allowing the gearbox 10 to meet reliability targets. The ceramic rolling elements also bring excellent oil-off performance, low oil flow requirements, low heat generation, and light weight design as additional benefits. Commercially the design will have a long life, which will minimize the cost of replacement over the life of the product.

The foregoing has described a gearbox carrier support apparatus, a gearbox, and a bearing arrangement therefor. While specific embodiments of the present invention have been described, it will be apparent to those skilled in the art that various modifications thereto can be made within the scope of the claims. Accordingly, the foregoing description of the preferred embodiment of the invention and the best mode for practicing the invention are provided for the purpose of illustration only and not for the purpose of limitation.

## Claims

1. An apparatus for supporting a gearbox, comprising:
a gearbox carrier (16) having a central axis (A), the carrier (16) configured to mount one or more rotating gears (12, 18, 22) therein, the carrier (16) including spaced-apart forward and aft walls (26, 28), and a center plate (58) disposed halfway between the forward and aft walls (26, 28) in an axial direction with respect to the central axis (A);
an annular support ring (60) disposed axially adjacent to the carrier (16); and
a plurality of axially-extending torque fingers (68) interconnecting the support ring (60) and the center plate (58).

2. The apparatus of claim 1 wherein the carrier (16) comprises at least one sidewall (54) interconnecting the forward and aft walls (26, 28).

3. The apparatus of claim 1 wherein each torque finger (68) has a first cross-sectional area at an aft end (70) thereof and tapers to a second cross-sectional area smaller than the first cross-sectional area at a forward end (72) thereof.

4. The apparatus of claim 1 wherein a cross-sectional width of the torque fingers (68) in a tangential direction with respect to the central axis (A) is greater than a cross-sectional thickness of the torque fingers (68) in a radial direction with respect to the central axis (A).

5. The apparatus of claim 1 wherein the support ring (60), the center plate (58), and the torque fingers (68) are part of a monolithic component

6. A gearbox, comprising:
the apparatus of claim 1; and
a gear train (12, 18, 22) supported within the carrier (16).

7. The gearbox of claim 6 wherein the gear train (12, 18, 22) includes at least one gear (18) supported for rotation by a bearing that comprises a plurality of generally cylindrical rollers (52) made of a ceramic material.

8. The gearbox of claim 7 wherein the rollers (52) have a barrel-like shape with a central crown (53) of maximum diameter and end portions (55) tapering off from the central crown (53) to a smaller diameter.

## Patentansprüche

1. Vorrichtung zum Tragen eines Getriebes, umfassend:
einen Getriebeträger (16) mit einer Mittelachse (A), wobei der Träger (16) konfiguriert ist, um ein oder mehrere rotierende Zahnräder (12, 18, 22) darin zu montieren, wobei der Träger (16) eine vordere und eine hintere Wand (26, 28), die voneinander beabstandet sind, und eine Mittelplatte (58) einschließt, die auf halbem Weg zwischen der vorderen und der hinteren Wand (26, 28) in einer axialen Richtung in Bezug auf die Mittelachse (A) angeordnet ist;
einen ringförmigen Stützring (60), der axial neben dem Träger (16) angeordnet ist; und
eine Vielzahl von sich axial erstreckenden Drehmomentfingern (68), die den Stützring (60) und die Mittelplatte (58) miteinander verbinden.

2. Vorrichtung nach Anspruch 1, wobei der Träger (16) mindestens eine Seitenwand (54) umfasst, die die vordere und hintere Wand (26, 28) miteinander verbindet.

3. Vorrichtung nach Anspruch 1, wobei jeder Drehmomentfinger (68) an einem hinteren Ende (70) davon eine erste Querschnittsfläche aufweist und sich an einem vorderen Ende (72) davon zu einer zweiten Querschnittsfläche verjüngt, die kleiner als die erste Querschnittsfläche ist.

4. Vorrichtung nach Anspruch 1, wobei eine Querschnittsbreite der Drehmomentfinger (68) in einer tangentialen Richtung in Bezug auf die Mittelachse (A) größer ist als eine Querschnittsdicke der Drehmomentfinger (68) in einer radialen Richtung in Bezug auf die Mittelachse (A).

5. Vorrichtung nach Anspruch 1, wobei der Stützring (60), die Mittelplatte (58) und die Drehmomentfinger (68) Teil einer monolithischen Komponente sind

6. Getriebe, umfassend:
die Vorrichtung nach Anspruch 1; und
einen Getriebezug (12, 18, 22), der in dem Träger (16) gestützt wird.

7. Getriebe nach Anspruch 6, wobei der Getriebezug (12, 18, 22) mindestens ein Zahnrad (18) einschließt, das zur Drehung durch ein Lager getragen wird, das eine Vielzahl von allgemein zylindrischen Rollen (52) aus einem keramischen Material umfasst.

8. Getriebe nach Anspruch 7, wobei die Rollen (52) eine tonnenartige Form mit einer zentralen Krone (53) mit maximalem Durchmesser und Endabschnitten (55) aufweisen, die sich von der zentralen Krone (53) auf einen kleineren Durchmesser verjüngen.

## Revendications

1. Appareil de support de boîte de vitesses, comprenant :
un support de boîte de vitesses (16) ayant un axe central (A), le support (16) étant conçu pour monter un ou plusieurs engrenages rotatifs (12, 18, 22) dans celui-ci, le support (16) comportant des parois avant et arrière espacées (26, 28), et une plaque centrale (58) disposée à mi-chemin entre les parois avant et arrière (26, 28) dans une direction axiale par rapport à l'axe central (A) ;
une bague de support annulaire (60) disposée axialement adjacente au support (16) ; et
une pluralité de doigts de couple s'étendant axialement (68) reliant la bague de support (60) et la plaque centrale (58).

2. Appareil selon la revendication 1, dans lequel le support (16) comprend au moins une paroi latérale (54) reliant les parois avant et arrière (26, 28).

3. Appareil selon la revendication 1, dans lequel chaque doigt de couple (68) a une première surface de section transversale au niveau d'une extrémité arrière (70) de celui-ci et se rétrécit jusqu'à une seconde surface de section transversale plus petite que la première surface de section transversale au niveau d'une extrémité avant (72) de celle-ci.

4. Appareil selon la revendication 1, dans lequel une largeur de section transversale des doigts de couple (68) dans une direction tangentielle par rapport à l'axe central (A) est supérieure à une épaisseur de section transversale des doigts de couple (68) dans une direction radiale par rapport à l'axe central (A).

5. Appareil selon la revendication 1, dans lequel l'anneau de support (60), la plaque centrale (58) et les doigts de couple (68) font partie d'un composant monolithique

6. Boîte de vitesses, comprenant :
l'appareil selon la revendication 1 ; et
un train d'engrenages (12, 18, 22) supporté à l'intérieur du support (16).

7. Boîte de vitesses selon la revendication 6, dans laquelle le train d'engrenages (12, 18, 22) comporte au moins un engrenage (18) supporté pour tourner par un palier qui comprend une pluralité de rouleaux généralement cylindriques (52) réalisés en un matériau céramique.

8. Boîte de vitesses selon la revendication 7, dans laquelle les rouleaux (52) ont une forme de tonneau avec une couronne centrale (53) de diamètre maximal et des parties d'extrémité (55) s'effilant à partir de la couronne centrale (53) jusqu'à un diamètre plus petit.
